# EUROPEAN PATENT APPLICATION

(11) **EP 3 486 855 A1**
(43) Date of publication of application: **22.05.2019**
(21) Application number: 18150238.6
(22) Date of filing: 03.01.2018
(51) Int. Cl.: G06Q 20/38, G06Q 20/06

(54) **SYSTEM AND METHOD TO VALIDATE BLOCKCHAIN TRANSACTIONS IN A DISTRIBUTED LEDGER NETWORK**

(30) Priority: 21.11.2017 IN 201741041664
(71) Applicant: Wipro Limited, 560 035 Karnataka (IN)
(72) Inventor: KASTHURI, Magesh, 631 501 Tamilnadu State (IN)
(74) Representative: Finnegan Europe LLP

(57) **Abstract**

System and method to validate blockchain transactions in a distributed ledger network is disclosed. The method includes adding, by a computing node in the distributed ledger network, a transaction validation information in a header of a block, wherein the transaction validation information is encrypted. The method further includes transmitting, by the computing node, the block comprising the transaction validation information in the header to a validator computing node in the distributed ledger network. The method includes receiving, by a validator computing node, a transaction validation information in a header of a block from a computing node in the distributed ledger network, wherein the transaction validation information is encrypted and is associated with a blockchain transaction. The method further includes decrypting and validating the blockchain transaction, by the validator computing node, based on the transaction validation information in the header of the block in response to the decryption.

## Description

### Technical Field

This disclosure relates generally to distributed ledger networks and more particularly, but not exclusively, to a system and method to validate blockchain transactions in a distributed ledger network.

### Background

After the emergence of digital technology and penetration of Internet services, peer-to-peer transactions have risen. Blockchain is one such platform that enables such transactions and is used, for example, to transfer cryptocurrency (such as Bitcoin) from one user to another. Blockchain is being widely used because of its user-friendly features like transparency, immutability, and lower transaction cost. Peer-to-peer transactions may be executed through either a public ledger or a permissioned ledger.

Validating a transaction executed through a permissioned ledger is a daunting task. This is due to the non-availability of proof of work and the difficulty in creating a node. Conventional mechanisms of validating a peer-to-peer transaction using a blockchain platform have a few limitations. For example, in s permissioned ledger, for validating the peer-to-peer transaction-using node, blockchain developer permission is required.

Some conventional mechanisms use a Merkel tree for blockchain transaction validation. However, traversing through a Merkel tree is a complex and time-consuming process, as the Merkel tree is constructed with various information pertaining to customer information, account information, and currency information in an unorganized manner.

The conventional mechanisms result in inappropriate validation of peer-to-peer transactions. Also, the processing and transmission overhead impacts service quality for peer-to-peer transactions, especially under heavy network load conditions and/or congestion.

### SUMMARY

In one embodiment, a method of enabling validation of blockchain transactions in a distributed ledger network is disclosed. The method includes adding, by a computing node in the distributed ledger network, a transaction validation information in a header of a block, wherein the transaction validation information is encrypted. The method further includes transmitting, by the computing node, the block comprising the transaction validation information in the header to a validator computing node in the distributed ledger network, wherein the block is shared with an approver computing node post validation by the validator computing node.

In another embodiment, a method of validating blockchain transactions in a distributed ledger network is disclosed. The method includes receiving, by a validator computing node, a transaction validation information in a header of a block from a computing node in the distributed ledger network, wherein the transaction validation information is encrypted and is associated with a blockchain transaction. The method further includes decrypting the transaction validation information. The method further includes validating the blockchain transaction, by the validator computing node, based on the transaction validation information in the header of the block in response to the decryption.

In yet another embodiment, a computing node in a distributed ledger network for enabling validation of blockchain transactions in a distributed ledger network is disclosed. The computing node includes at least one processor and a memory communicatively coupled to the at least one processor and having processor instructions stored thereon, causing the processor, on execution to add a transaction validation information in a header of a block, wherein the transaction validation information is encrypted; and transmit the block comprising the transaction validation information in the header to a validator computing node in the distributed ledger network, wherein the block is shared with an approver computing node post validation by the validator computing node.

The processor instructions may further cause an intermediate computing node in the distributed ledger network to receive the block, wherein the intermediate computing node lies between the computing node and the validator computing node in the distributed ledger network. The processor instructions further cause the intermediate computing node to: create a modified transaction validation information from the transaction validation information included in the header of the block, wherein the modified transaction validation information is modified based on requirement of an entity associated with a computing node succeeding the intermediate computing node in the distributed ledger network; and add the modified transaction validation information in a header of an intermediate block associated with the intermediate computing node.

The processor instructions may further cause the intermediate computing node to retain the transaction validation information of the block in the header of the intermediate block; and create a transaction validation tree comprising traversal relation between the transaction validation information and the modified transaction validation information.

The intermediate computing node, and the method performed at the intermediate computing node, may be provided independently of the other nodes in the distributed ledger network.

In one embodiment, a validator computing node for validating blockchain transactions in a distributed ledger network is disclosed. The computing node includes at least one processor and a memory communicatively coupled to the at least one processor and having processor instructions stored thereon, causing the processor, on execution to receive a transaction validation information in a header of a block from a computing node in the distributed ledger network, wherein the transaction validation information is encrypted and is associated with a blockchain transaction; decrypt the transaction validation information and validate the blockchain transaction based on the transaction validation information in the header of the block.

In yet another embodiment, a non-transitory computer-readable medium storing computer-executable instructions for validating blockchain transactions in a distributed ledger network is disclosed. In one example, the stored instructions, when executed by a processor, cause the processor to perform operations that include adding, by a computing node in the distributed ledger network, a transaction validation information in a header of a block, wherein the transaction validation information is encrypted. The operations further includes transmitting the block comprising the transaction validation information in the header to a validator computing node in the distributed ledger network, wherein the block is shared with an approver computing node post validation by the validator computing node.

The present disclosure may also provide a distributed ledger network comprising, in any combination, any of: one or more issuer computing nodes; one or more intermediate computing nodes; one or more validator computing nodes; and/or one or more receiver computing nodes as described herein. The present disclosure may also provide a method performed by such a distributed ledger network. Further, the present disclosure may also provide a computer-readable medium and/or a computer program product for performing such a method.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, explain the disclosed principles.
**FIG. 1** illustrates a distributed ledger network in which various embodiments may be employed.
**FIG. 2** illustrates a block diagram of a system within one or more computing nodes for validating blockchain transactions in a distributed ledger network, in accordance with an embodiment.
**FIG. 3** illustrates a flow chart of a method of enabling validation of blockchain transactions in a distributed ledger network, in accordance with an embodiment.
**FIG. 4** illustrates a flow chart of a method of processing a block comprising transaction validation information by an intermediate computing node, in accordance with an embodiment.
**FIG. 5** illustrates a flow chart of method for validating transactions in a distributed ledger network, in accordance with an embodiment.
**FIG. 6** illustrates a flow chart of method for processing a block comprising transaction validation information and creating a validated block to be processed by a receiver computing node, in accordance with an embodiment.
**FIG. 7** illustrates a block diagram of an exemplary computer system for implementing various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

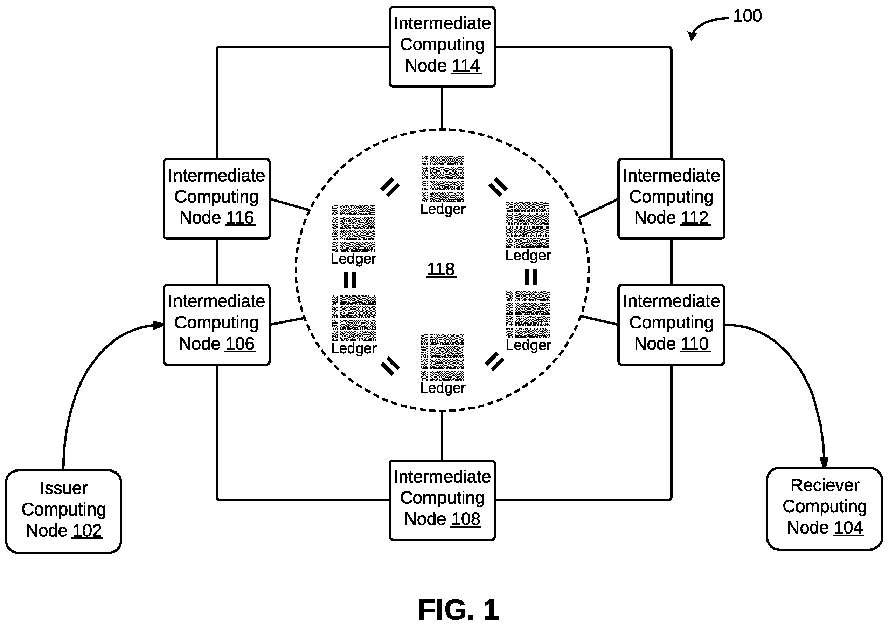

Additional illustrative embodiments are listed below. In one embodiment, a distributed ledger network 100, in which various embodiments may be employed, is illustrated in FIG. 1. Distributed ledger network 100 may be one of a blockchain network or a hashgraph network. It will be apparent to a person skilled in the art that the invention is not limited to the type of networks mentioned above and is relevant to all variations and implementations of distributed ledger network 100. Thus, the term "blockchain" as used herein should preferably be construed as referring to any technical implementation of a distributed ledger, unless the context dictates otherwise. Likewise, the term "blockchain transaction" as used herein should preferably be construed as referring to a transaction involving any technical implementation of a distributed ledger, unless the context dictates otherwise.

In distributed ledger network 100, an issuer computing node 102 associated with a sender entity (not shown in FIG. 1) initiates a blockchain transaction for a receiver computing node 104 associated with a receiver entity (not shown in FIG. 1). The blockchain transaction may include, but is not limited to, a clearing transaction, or a settlement transaction. It will be apparent to a person skilled in the art that distributed ledger network 100 may include multiple issuer and receiver computing nodes.

Distributed ledger network 100 also includes a plurality of intermediate computing nodes, for example, an intermediate computing node 106, an intermediate computing node 108, an intermediate computing node 110, an intermediate computing node 112, an intermediate computing node 114, and an intermediate computing node 116. It will be apparent to a person skilled in the art that issuer computing node 102 and receiver computing node 104 are technically similar to each of the plurality of intermediate computing nodes and only differ by way of the performed functionalities.

Each of issuer computing node 102, receiver computing node 104, and the plurality of intermediate computing nodes are capable of running one or more applications and establishing communication with other computing nodes. Examples of computing nodes may include, but are not limited to a computer, a smart phone, a Personal Digital Assistant (PDA), a laptop, a tablet and so forth.

In order to initiate a blockchain transaction, issuer computing node 102 uses cryptographic tools to digitally sign a proposed update to a ledger 118 (which is shared across the plurality of intermediate computing nodes). In an exemplary scenario, the previously mentioned blockchain transaction may correspond to a payment transaction. In such a scenario, the ledger 118 may be used for transferring funds from an account on ledger 118 to an account associated with an entity owning receiver computing node 104. As depicted in FIG. 1, upon receiving the transfer request, intermediate computing node 106 authenticates identity of issuer computing node 102 and validates the blockchain transaction by checking that issuer computing node 102 has necessary cryptographic credentials to make an update to ledger 118. Validation of the blockchain transaction may also include verifying whether issuer computing node 102 has sufficient funds to make the payment and fulfill the blockchain transaction.

In a similar manner, each of the remaining plurality of intermediate computing nodes authenticate identity of issuer computing node 102 and validate the blockchain transaction. Based on this, the plurality of intermediate computing nodes initiates a consensus process in order to agree on the payments that should be included in the next update to ledger 118. The consensus process ensures that no two intermediate computing nodes have conflicting records of ledger 118. Once the update to ledger 118 has been accepted by each of the plurality of intermediate computing nodes, the blockchain transaction is processed and the account associated with an entity owning receiver computing node 104 receives the payment.

In an alternate implementation, one of the plurality of intermediate computing nodes may act as a validator computing node, which is permissioned to confirm validity of changes proposed to ledger 118. By way of an example, intermediate computing node 110 may act as a validator computing node. In this case, until intermediate computing node 110 validates changes to ledger 118 proposed by issuer computing node 102, the blockchain transaction is not completed and funds are not transferred to the account of entity owning receiver computing node 104. The validator computing node identifies state changes in ledger 118 that are consistent according to rules of the arrangement (for example, assets are available to issuer computing node 102 and both receiver computing node 104 and issuer computing node 102 are entitled to exchange the assets). In order to do so, the validator computing node may rely on a record of previous states of ledger 118, either as a "last agreed state" or as a "chain of previous states." Thus in this alternate implementation, checking the chain of previous communication is an overhead for the validator computing node.

The validator computing node may use cryptographic tools to verify whether a computing node participating in a blockchain transaction has the proper credentials to do so. The validator computing node may also use the cryptographic tools to restrict access to data in distributed ledger network 100, so that only approved computing nodes may be able to access restricted information.

The existing mechanism of validating a blockchain transaction in a permissioned ledger is a time consuming task and is computationally onerous. This can be solved with a relational clustered algorithm that creates a transaction validation tree, which is a cluster of information that includes customer information attributes and account information attributes within header of blocks in a transaction communication channel within distributed ledger network 100. As a result, any blockchain transaction initiated by issuer computing node 102 for receiver computing node 104 can be validated at ease by a single validator computing node, without checking the chain of previous communication.

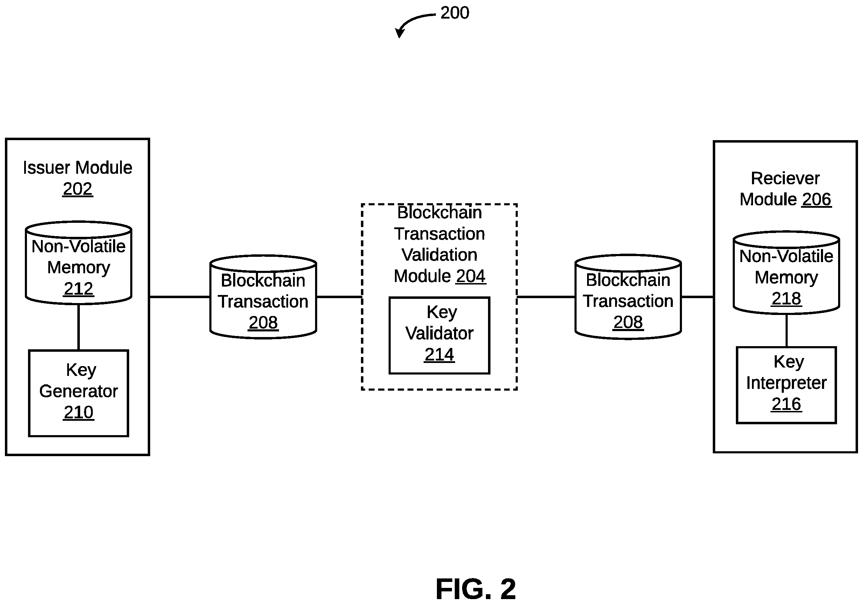

Referring now to FIG. 2, a block diagram of a system 200 within one or more computing nodes for validating blockchain transactions in a distributed ledger network is illustrated, in accordance with an embodiment. The computing node, for example, may be one of issuer computing node 102, receiver computing node 104, or one of the plurality of intermediate computing nodes. System 200 includes an issuer module 202, a blockchain transaction validation module 204, and a receiver module 206. Each of these modules may be located within one or more processors (not shown in the FIG. 2) of a single computing node or distributed across multiple computing nodes within the distributed ledger network to facilitate a blockchain transaction 208.

A user or an entity associated with issuer computing node 102 may submit a request to initiate a blockchain transaction via issuer computing node 102. The request may include details associated with an issuer and a receiver along with transaction information (for example, amount, source currency, target currency, and transaction remarks). Based on the request, issuer module 202 initiates blockchain transaction 208 from issuer computing node 102 using online blockchain system.

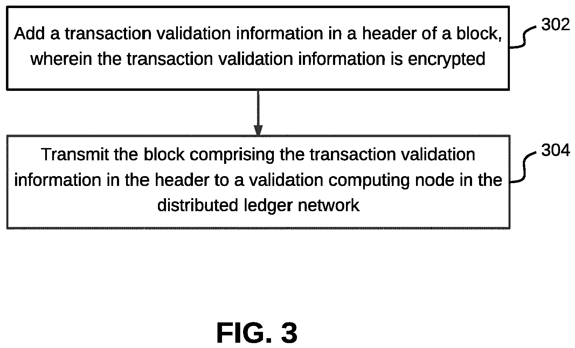

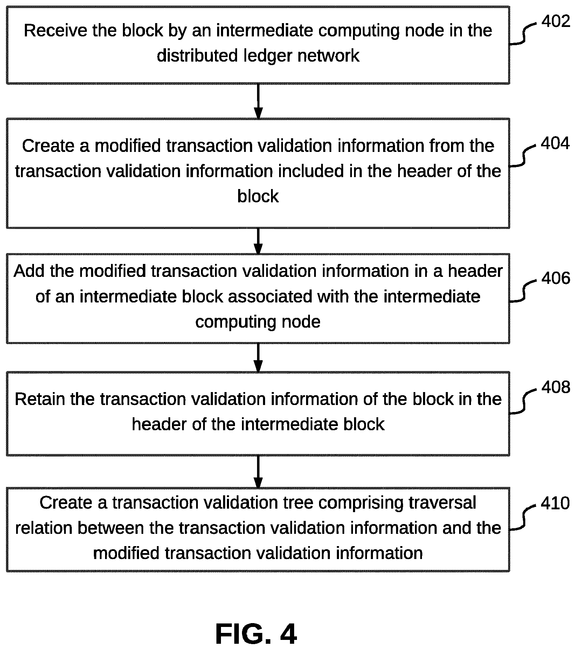

Issuer module 202 includes a key generator 210 that adds and encrypts transaction validation information in a header of a block. The block may be a first block of blockchain transaction 208. This is further explained in detail in conjunction with FIG. 3 and 4. The transaction validation information includes account information attributes and customer information attributes associated with each of the transferee (the target user having the account in which the transfer is to be made) and transferor (the user that initiates the transfer). The transferor may be a user associated with the computing node.

In an embodiment, the account information attributes may include, but is not limited to, one or more of an account identifier, an account type, an account model, an account classification, an account security, mode of operation, execution type, operative model, primary owner, secondary owner, nominee attributes, last operated account, account active status, approval status, negative balance attributes, or bank remarks. Further, the customer information attributes may include, but is not limited to, at least one of a customer name, country of origin, allowed country of operations, customer type, customer category, operation type, execution type, customer address, linked accounts, secondary operator, bank remarks, or credit score.

In an embodiment, the key generator 210 may be communicatively coupled with a non-volatile memory 212. Examples of non-volatile memory 212, may include, but are not limited to a flash memory, a Read Only Memory (ROM), a Programmable ROM (PROM), Erasable PROM (EPROM), and Electrically EPROM (EEPROM) memory.

Blockchain transaction validation module 204 receives the block, in which the header includes encrypted transaction validation information. A key validator 214, in blockchain transaction validation module 204 communicates with a key interpreter 216 (in receiver module 206) to retrieve transaction details and validation details (for example, address or identification remarks) based on regulatory requirement of an entity as required by an approver.

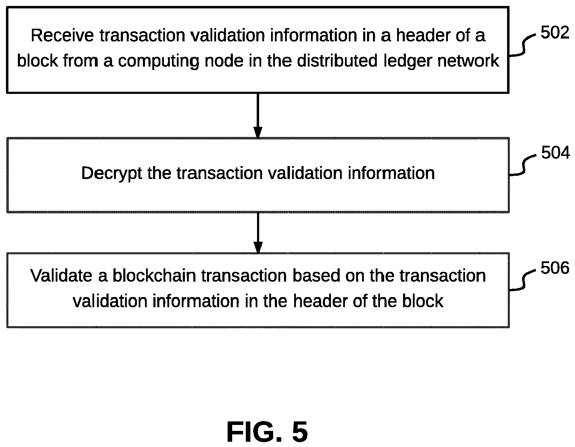

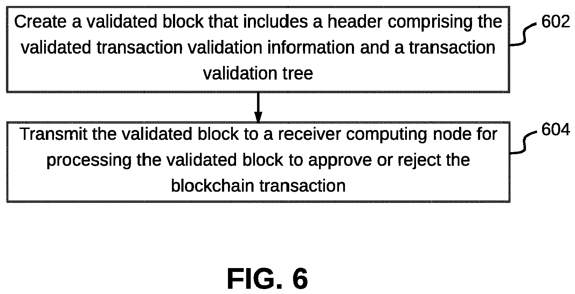

Based on this, key validator 214 validates blockchain transaction 208. Key interpreter 216 converts the encrypted transaction validation information into validation remarks as required by the approver and used for validation process. Key interpreter 216 also send final validation remarks to issuer computing node 102 after the validation is completed. This is further explained in detail in conjunction with FIG. 5 and 6.

In an embodiment, the key interpreter 216 may be in communication with a non-volatile memory 218 in receiver module 206. Each of non-volatile memories 212 and 218 may store data related to user/application details, blockchain transaction details, and executable instruction that enable validation of blockchain transaction 208. The non-volatile memories 212 and 218 may also include instructions for various modules in system 200; configuration data including thresholds, configuration parameter values, look-up tables, etc; tariff tables that include provisioned values of tariff tables, including inter-network charging blockchain transaction charges; regulatory and policy data such as category of transaction which falls under non-chargeable, upper/lower limit of transaction, etc.; relevant historical data including those used in various estimations and threshold adaptations; trends and correlation insights that have been determined by the blockchain validation modules for quick reference during various validation analysis; and relevant past data of network conditions, congestion indications, service quality degradation/disruption, outages, alarms, session characteristics, and duration along with timestamp, etc.

Once validation of blockchain transaction 208 is successfully completed and approved by receiver computing node 104 or any other approving authority during the validation process, receiver module 206 may receive a payment associated with blockchain transaction 208 from issuer module 202.

Referring now to FIG. 3, a flow chart of a method for enabling validation of blockchain transactions in a distributed ledger network is illustrated, in accordance with an embodiment. The distributed ledger network, for example, may be a blockchain network, a hashgraph network, or a Hyperledger based network. As explained in FIG. 1, the distributed ledger network may include a plurality of computing nodes and each of the plurality of computing nodes may have a specific role.

In the distributed ledger network, a sender entity, via a computing node, which may be issuer computing node 102, may initiate a blockchain transaction through the distributed ledger network for receiver computing node 104. The blockchain transaction, for example, may be initiated for an instrument transfer from issuer computing node 102 to the receive computing node 104. In this case, issuer computing node 102 may be the transferring entity and receiver computing node 104 may be the transferee entity. Based on the access network type and the session type, issuer computing node 102 sends an appropriate trigger to the distributed ledger network and requests for authorization.

In the initiated blockchain transaction, issuer computing node 102, which is the transferring entity, fetches transaction validation information that includes account information attributes and customer information attributes associated with the transferee and transferor (i.e., the sender entity). The account information attributes include, but are not limited to, one or more of an account identifier, an account type, an account model, an account classification, an account security, mode of operation, execution type, operative model, primary owner, secondary owner, nominee attributes, last operated account, account active status, approval status, negative balance attributes, or bank remarks. Further, the customer information attributes include, but are not limited to, at least one of a customer name, country of origin, allowed country of operations, customer type, customer category, operation type, execution type, customer address, linked accounts, secondary operator, bank remarks, or credit score.

At step 302, issuer computing node 102 adds the transaction validation information in a header of a block. The block may be a first block of the transaction session and the transaction validation information may be encrypted. After being added in the header, the transaction validation information may also include a block Identifier (ID) associated with issuer computing node 102. In an embodiment, key generator 210 may convert the transaction validation information into a block in a transaction communication channel of the distributed ledger network. In an embodiment, the block of information in a blockchain transaction communication channel may include two compartments, one for customer information attributes and the second for account information attributes. This information is added in the header of the block. In an exemplary embodiment, this may be depicted by table 1 give below:

**TABLE 1**

| **Customer Information Block** |
|---|
| Sender Name (Full, Given, Last) |
| Id details (Type of ID and ID no.) |
| Date of Transaction |
| Customer Address |
| Relation of Sender in Sender Bank (Account details) |

| **Account Information Block** |
|---|
| Sender currency code (ISO notation) |
| Amount to transfer |
| VAT/TAX/Service Fee |
| Receiver Currency code (ISO notation) |
| Receiver account details (Acc no, Acc type) |
| Receiver Bank details |
| Sender Remarks |
| Approver remarks |
| Block Identifier |

Thereafter, at step 304, issuer computing node 102 transmits the block, which includes the transaction validation information in the header, to a validator computing node (for example, intermediate computing node 110) in the distributed ledger network. Before reaching the validator computing node, the block is received and further forwarded by one or more intermediate computing nodes. This is explained in detail in conjunction with FIG. 4. The validation computing node decrypts the transaction validation information and performs validation based on the account information attributes and customer information attributes included in the transaction validation information. The validation process is further explained in detail in conjunction with FIG. 5. After validation, the block is shared with an approver computing node, which may be receiver computing node 104. This is further explained in detail in conjunction with FIG. 6.

Referring now to FIG. 4, a flowchart of a method of processing a block comprising transaction validation information by an intermediate computing node is illustrated, in accordance with an embodiment. Referring back to step 304 of FIG. 3, before a validator computing node receives the block that includes the transaction validation information in the header, an intermediate computing node in the distributed ledger network receives the block, at step 402. The intermediate computing node lies between issuer computing node 102 and the validator computing node in the distributed ledger network. By way of an example, any of the plurality of intermediate computing nodes illustrated in FIG. 1, may act as an intermediate computing node.

Based on the transaction validation information included in the header of the block, the intermediate computing node creates a modified transaction validation information at step 404. The modified transaction validation information may be created based on requirement of an entity associated with a computing node succeeding the intermediate computing node in the distributed ledger network. By way of an example, intermediate computing node 108 succeeds an intermediate computing node 106 in distributed ledger network 100. In this case, based on information requirement of an entity owning intermediate computing node 108, the intermediate computing node 106 may modify the transaction validation information in the block received from issuer computing node 102.

In an embodiment, the transaction validation information may be used as it is throughout the distributed ledger network, until the block that includes the transaction validation information reaches receiver computing node 104. However, customer information attributes may be changed by intermediate computing nodes during every block transfer in the transaction communication channel. By way of an example, an entity associated with intermediate computing node 108 may not be interested in customer address or customer contact number during the transfer, thus intermediate computing node 106 (which immediately precedes intermediate computing node 108) may create a modified transaction validation information that does not include customer address or customer contact number.

Additionally, at step 406, the intermediate computing node adds the modified transaction validation information in a header of an intermediate block associated with the intermediate computing node. In other words, after each intermediate computing node creates a modified transaction validation information, a new block (intermediate block) is added to the block transmitted by issuer computing node 102 at step 304. This new block (intermediate block) includes the modified transaction validation information and a new block ID associated with the intermediate block.

The intermediate computing node, at step 408, also retains the transaction validation information of the block in the header of the intermediate block. In other words, the modified transaction validation information and the transaction validation information both may be included in the header of the intermediate block. Thus, the transaction validation information as included in the block transmitted by issuer computing node 102 may be retained throughout the distributed ledger network, until the block is received by receiver computing node 104. Additionally, at every intermediate computing node, the modified transaction validation information is added to the header of a new intermediate block. In an alternate embodiment, at every intermediate computing node, an intermediate block is added to the first block transmitted by issuer computing node 102, thus forming a chain of blocks. In this case, each intermediate block would only include modified transaction validation information as created by an associated intermediate computing node.

As discussed above, when a blockchain transaction is initiated from issuer computing node 102, a block is created with customer information attributes, account information attributes, and a unique block ID in the header of the block. This will be taken through all the blocks created in the distributed ledger network as per a pre-defined transmission protocol. Examples of the pre-defined transmission protocol may include, but are not limited to, ripple transaction protocol, Hyperledger, symbiotic distributed ledger, or Corda. When the next block (intermediate block) is created, the header is copied to the new block and the customer information attributes are validated as per validation rules. Thus a single lenient structure of information is created in a blockchain transmission. This process of transmitting block ID and header is repeated for each block created in the blockchain transmission until a final block is created at the validator computing node, which accepts a received block for validation to complete the blockchain transaction.

At step 410, the intermediate computing node creates a transaction validation tree that includes traversal relation between the transaction validation information and the modified transaction validation information. In other words, the transaction validation tree is a cluster of information that is included in the header of the block and indicates the path traversed by the block in the distributed ledger network to reach the intermediate computing node. Moreover, the transaction validation tree also includes details regarding the modification made to the transaction validation information at each intermediate computing node traversed on the path. This may be required when tracking of blockchain transaction is to be performed.

In the transaction validation tree, the transaction validation information forms a root node of the transaction validation tree, when issuer computing node 102 initiates a blockchain transaction. In other words, the transaction validation information encrypted in the block transmitted by issuer computing node 102, forms the root node in the transaction validation tree. This is followed by modified transaction validation information created by subsequent intermediate computing nodes in the order of traversal. This is continued until the validator computing node is reached and the validation process is initiated.

The transaction validation tree acts as a convenient clustered data store mechanism that enables efficient validation mechanism and improves the validation process for any type of blockchain transaction. The validator computing node is linked to the approval process for the blockchain transaction, which will be executed by receiver computing node 104 to approve or reject the blockchain transaction by checking the transaction validation tree received in a final block from the validation computing node. The transaction validation tree may be finally stored in a ledger transaction by receiver computing node 104 after the validation is complete. The validation process is further explained in detailed in conjunction with FIG. 5.

Referring to FIG. 5, a flowchart of method for validating blockchain transactions in a distributed ledger network is illustrated, in accordance with an embodiment. Once a block that includes transaction validation information in its header is transmitted by issuer computing node 102, the block is processed by one or more intermediate computing nodes. Thereafter, at step 502, the validator computing node receives the transaction validation information in the header of the block. The transaction validation information is associated with a blockchain transaction. The validator computing node decrypts the transaction validation information at step 504.

After the transaction validation information has been decrypted, at step 504, validator computing node validates the blockchain transaction, based on the transaction validation information in the header of the block. When the validator computing node receives the block to be validated, the information required to perform validation within the customer information attributes may be delinked from transaction validation information and transaction validation tree (which is a cluster of information) is prepared for the approver computing node to validate and proceed further with the blockchain transaction. In an embodiment, the validator computing node decrypts the information in the validated block and sends it to the approver computing node through a non-volatile memory transfer. This information will not be persisted until the validation process is complete to handle blockchain transaction only in the respective entities of the sender and receiver, i.e., issuer computing node 102 and receiver computing node 104. This is further explained in detail in conjunction with FIG. 6.

Referring now to FIG. 6, a flowchart of method of processing a block comprising transaction validation information and creating a validated block to be processed by a receiver computing node is illustrated, in accordance with an embodiment. Referring back to FIG. 5, after a transaction validation information is validated, the validator computing node creates a validated block, at step 602, such that, a header of the validated block includes the validated transaction validation information and a transaction validation tree. The transaction validation tree is the cluster of information prepared at step 504.

Thereafter, at step 604, the validator computing node, transmits the validated block to receiver computing node 104, which further processes the validated block in order to approve or reject the blockchain transaction. Thus, the blockchain transaction culminates at receiver computing node 104. Once the validation process is complete, the information on approval status may be attached to the validated block (the final block) and may subsequently be sent to receiver computing node 104. Receiver computing node 104 may be used to retrieve receiver account information from a database in receiver computing node 104 at a later stage. Based on the retrieved details, the blockchain transaction may be realized or credited to a receiver account associated with receiver computing node 104, as instructed by the sender entity during initiation of the blockchain transaction. The information included in the instructions, may include, but is not limited to, currency type and mode of receipt (cash or credit note, etc.).

Remaining steps of realization of payments or rejection of blockchain transaction, i.e., the post validation outcome, may be performed in a regular blockchain hierarchy of process. This may work in premised ledger based blockchain transactions, as the boundary of information required for preparation of validated block is bound to information available from customer and account information attributes.

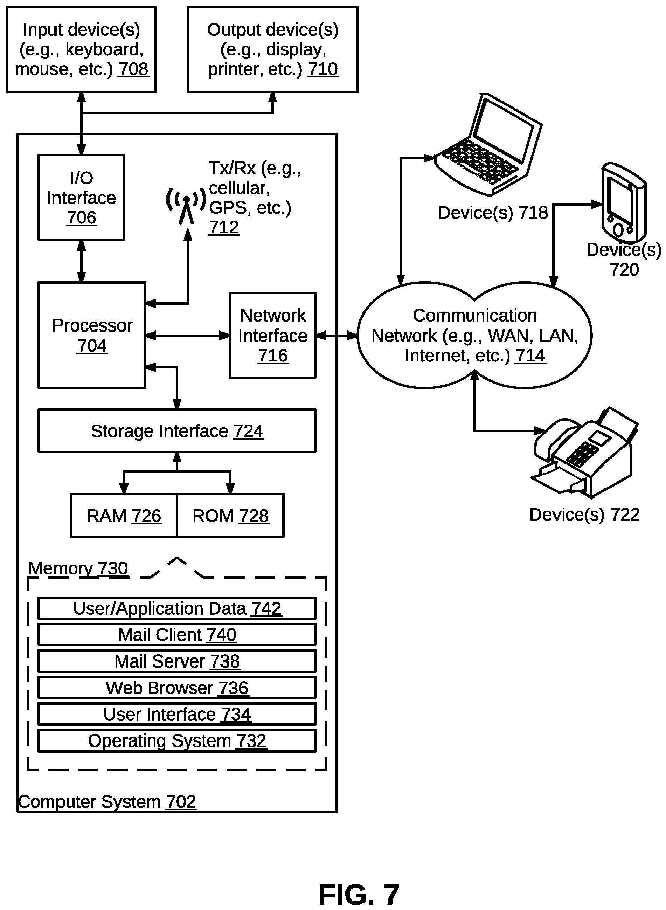

Referring now to FIG. 7, a block diagram of an exemplary computer system for implementing various embodiments is illustrated. Computer system 702 may include a central processing unit ("CPU" or "processor") 704 that includes at least one data processor for executing program components for executing user-generated requests or system-generated requests. A user may include a person, a person using a device such as such as those included in this disclosure, or such a device itself. Processor 704 may include specialized processing units such as integrated system (bus) controllers, memory management control units, floating point units, graphics processing units, digital signal processing units, etc. Processor 704 may include a microprocessor, such as AMD® ATHLON® microprocessor, DURON® microprocessor OR OPTERON® microprocessor, ARM's application, embedded or secure processors, IBM® POWERPC®, INTEL'S CORE® processor, ITANIUM® processor, XEON® processor, CELERON® processor or other line of processors, etc. Processor 704 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 704 may be disposed in communication with one or more input/output (I/O) devices via an I/O interface 706. I/O interface 706 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using I/O interface 706, computer system 702 may communicate with one or more I/O devices. For example, an input device 708 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 710 may be a printer, fax machine, video display (e.g., cathode ray tube (CRT), liquid crystal display (LCD), light-emitting diode (LED), plasma, or the like), audio speaker, etc. In some embodiments, a transceiver 712 may be disposed relating to processor 704. Transceiver 712 may facilitate various types of wireless transmission or reception. For example, transceiver 712 may include an antenna operatively connected to a transceiver chip (e.g., TEXAS® INSTRUMENTS WILINK WL1283® transceiver, BROADCOM® BCM4550IUB8® transceiver, INFINEON TECHNOLOGIES® X-GOLD 618-PMB9800® transceiver, or the like), providing IEEE 802.11a/b/g/n, Bluetooth, FM, global positioning system (GPS), 2G/3G HSDPA/HSUPA communications, etc.

In some embodiments, processor 704 may be disposed in communication with a communication network 714 via a network interface 716. Network interface 716 may communicate with communication network 714. Network interface 716 may employ connection protocols including, without limitation, direct connect, Ethernet (e.g., twisted pair 50/500/5000 Base T), transmission control protocol/internet protocol (TCP/IP), token ring, IEEE 802.11a/b/g/n/x, etc. Communication network 714 may include, without limitation, a direct interconnection, local area network (LAN), wide area network (WAN), wireless network (e.g., using Wireless Application Protocol), the Internet, etc. Using network interface 716 and communication network 714, computer system 702 may communicate with devices 718, 720, and 722. The devices may include, without limitation, personal computer(s), server(s), fax machines, printers, scanners, various mobile devices such as cellular telephones, smartphones (e.g., APPLE® IPHONE® smartphone, BLACKBERRY® smartphone, ANDROID® based phones, etc.), tablet computers, eBook readers (AMAZON® KINDLE® ereader, NOOK® tablet computer, etc.), laptop computers, notebooks, gaming consoles (MICROSOFT® XBOX® gaming console, NINTENDO® DS® gaming console, SONY® PLAYSTATION® gaming console, etc.), or the like. In some embodiments, computer system 702 may itself embody one or more of the devices.

In some embodiments, processor 704 may be disposed in communication with one or more memory devices (e.g., RAM 726, ROM 728, etc.) via a storage interface 724. Storage interface 724 may connect to memory 730 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

Memory 730 may store a collection of program or database components, including, without limitation, an operating system 732, user interface application 734, web browser 736, mail server 738, mail client 740, user/application data 742 (e.g., any data variables or data records discussed in this disclosure), etc. Operating system 732 may facilitate resource management and operation of computer system 702. Examples of operating systems 732 include, without limitation, APPLE® MACINTOSH® OS X platform, UNIX platform, Unix-like system distributions (e.g., Berkeley Software Distribution (BSD), FreeBSD, NetBSD, OpenBSD, etc.), LINUX distributions (e.g., RED HAT®, UBUNTU®, KUBUNTU®, etc.), IBM® OS/2 platform, MICROSOFT® WINDOWS® platform (XP, Vista/7/8, etc.), APPLE® IOS® platform, GOOGLE® ANDROID® platform, BLACKBERRY® OS platform, or the like. User interface 734 may facilitate display, execution, interaction, manipulation, or operation of program components through textual or graphical facilities. For example, user interfaces may provide computer interaction interface elements on a display system operatively connected to computer system 702, such as cursors, icons, check boxes, menus, scrollers, windows, widgets, etc. Graphical user interfaces (GUIs) may be employed, including, without limitation, APPLE® Macintosh® operating systems' AQUA® platform, IBM® OS/2® platform, MICROSOFT® WINDOWS® platform (e.g., AERO® platform, METRO® platform, etc.), UNIX X-WINDOWS, web interface libraries (e.g., ACTIVEX® platform, JAVA® programming language, JAVASCRIPT® programming language, AJAX® programming language, HTML, ADOBE® FLASH® platform, etc.), or the like.

In some embodiments, computer system 702 may implement a web browser 736 stored program component. Web browser 736 may be a hypertext viewing application, such as MICROSOFT® INTERNET EXPLORER® web browser, GOOGLE® CHROME® web browser, MOZILLA® FIREFOX® web browser, APPLE® SAFARI® web browser, etc. Secure web browsing may be provided using HTTPS (secure hypertext transport protocol), secure sockets layer (SSL), Transport Layer Security (TLS), etc. Web browsers may utilize facilities such as AJAX, DHTML, ADOBE® FLASH® platform, JAVASCRIPT® programming language, JAVA® programming language, application programming interfaces (APis), etc. In some embodiments, computer system 702 may implement a mail server 738 stored program component. Mail server 738 may be an Internet mail server such as MICROSOFT® EXCHANGE® mail server, or the like. Mail server 738 may utilize facilities such as ASP, ActiveX, ANSI C++/C#, MICROSOFT .NET® programming language, CGI scripts, JAVA® programming language, JAVASCRIPT® programming language, PERL® programming language, PHP® programming language, PYTHON® programming language, WebObjects, etc. Mail server 738 may utilize communication protocols such as internet message access protocol (IMAP), messaging application programming interface (MAPI), Microsoft Exchange, post office protocol (POP), simple mail transfer protocol (SMTP), or the like. In some embodiments, computer system 702 may implement a mail client 740 stored program component. Mail client 740 may be a mail viewing application, such as APPLE MAIL® mail client, MICROSOFT ENTOURAGE® mail client, MICROSOFT OUTLOOK® mail client, MOZILLA THUNDERBIRD® mail client, etc.

In some embodiments, computer system 702 may store user/application data 742, such as the data, variables, records, etc. as described in this disclosure. Such databases may be implemented as fault-tolerant, relational, scalable, secure databases such as ORACLE® database OR SYBASE® database. Alternatively, such databases may be implemented using standardized data structures, such as an array, hash, linked list, struct, structured text file (e.g., XML), table, or as object-oriented databases (e.g., using OBJECTSTORE® object database, POET® object database, ZOPE® object database, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide a system and method to validate blockchain transactions in a distributed ledger network. The invention provides mechanism of validating blockchain transactions in distributed ledger network, which is in commensurate with permissioned ledger system. The invention provides a new method of customer validation mechanism for blockchain transactions to enable the approver (receiver entity) to complete the blockchain transaction by validating the block (in blockchain transmission channel) that includes customer information. The primary goal of blockchain is better transaction management with higher processing rate due to anonymous transmission and multi-node approval. With the current invention, this goal is more efficiently achieved, as validation is self-controlled by the computing node which has access to customer information encrypted within a header of a block, instead of backtracking the entire communication chain to retrieve details associated with the customer. Also, the current invention ensures higher security of blockchain transaction as customer information is encrypted and transferred in each block until the blockchain transaction is validated and completed at receiver entity. Moreover, in the current invention, customized validation rule can be added in order to enforce country based regulatory rules for better transaction management and detection of fraudulent blockchain transactions.

The specification has described a system and method to validate blockchain transactions in a distributed ledger network. The illustrated steps are set out to explain the exemplary embodiments shown, and it should be anticipated that ongoing technological development will change the way functions are performed. Examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for enabling validation of blockchain transactions in a distributed ledger network, the method comprising:
adding, by a computing node in the distributed ledger network, a transaction validation information in a header of a block, wherein the transaction validation information is encrypted; and
transmitting, by the computing node, the block comprising the transaction validation information in the header to a validator computing node in the distributed ledger network, wherein the block is shared with an approver computing node post validation by the validator computing node.

2. The method of claim 1, further comprising receiving the block by an intermediate computing node in the distributed ledger network, wherein the intermediate computing node lies between the computing node and the validator computing node in the distributed ledger network.

3. The method of claim 2, further comprising:
creating, by the intermediate computing node, a modified transaction validation information from the transaction validation information included in the header of the block, wherein the modified transaction validation information is modified based on requirement of an entity associated with a computing node succeeding the intermediate computing node in the distributed ledger network; and
adding, by the intermediate computing node, the modified transaction validation information in a header of an intermediate block associated with the intermediate computing node.

4. The method of claim 3, further comprising:
retaining, by the intermediate computing node, the transaction validation information of the block in the header of the intermediate block; and
creating, by the intermediate computing node, a transaction validation tree comprising traversal relation between the transaction validation information and the modified transaction validation information.

5. The method of claim 4, wherein the transaction validation information forms a root node of the transaction validation tree, when the computing node is an issuer computing node initiating a transaction.

6. The method of any of the preceding claims, wherein the transaction validation information comprises one or more account information attributes, one or more customer information attributes, and a block identifier associated with the computing node.

7. The method of claim 6, wherein:
the account information attributes comprise at least one of an account identifier, an account type, an account model, an account classification, an account security, mode of operation, execution type, operative model, primary owner, secondary owner, nominee attributes, last operated account, account active status, approval status, negative balance attributes, or bank remarks; and/or
wherein the customer information attributes comprise at least one of a customer name, country of origin, allowed country of operations, customer type, customer category, operation type, execution type, customer address, linked accounts, secondary operator, bank remarks, or credit score.

8. The method of claim 6 or claim 7, wherein the validator computing node decrypts the transaction validation information and performs validation based on the one or more account information attributes and the one or more customer information attributes in the transaction validation information.

9. A method for validating blockchain transactions in a distributed ledger network, the method comprising:
receiving, by a validator computing node, a transaction validation information in a header of a block from a computing node in the distributed ledger network, wherein the transaction validation information is encrypted and is associated with a blockchain transaction;
decrypting, by the validator computing node, the transaction validation information; and
validating the blockchain transaction, by the validator computing node, based on the transaction validation information in the header of the block in response to the decrypting.

10. The method of claim 9, further comprising creating a validated block, by the validator computing node, wherein a header of the validated block comprises the validated transaction validation information and a transaction validation tree.

11. The method of claim 10, wherein the transaction validation tree comprises:
information associated with the validator computing node and a plurality of computing nodes traversed to reach the validator computing node; and
traversal relation between each of the plurality of computing nodes and the validator computing node, wherein a root node in the transaction validation tree is an issuer computing node that initiated the blockchain transaction.

12. The method of any of claims 9 to 11, further comprising transmitting the validated block to a receiver computing node for processing the validated block to approve or reject the blockchain transaction, wherein the blockchain transaction culminates at the receiver computing node.

13. A computing node for use in a distributed ledger network for enabling validation of blockchain transactions in the distributed ledger network, the computing node comprising:
at least one processor; and
a memory communicatively coupled to the at least one processor and having processor instructions stored thereon, for causing the processor, on execution of the instructions, to perform the method of any of claims 1 to 8.

14. A validator computing node for validating blockchain transactions in a distributed ledger network, the computing node comprising:
at least one processor; and
a memory communicatively coupled to the at least one processor and having processor instructions stored thereon, for causing the processor, on execution of the instructions, to perform the method of any of claims 9 to 12.

15. A computer-readable storage medium including instructions stored thereon, which when processed by at least one processor cause a system to perform the method of any of claims 1 to 12.
